# NEUE EUROPÄISCHE PATENTSCHRIFT

(11) **EP 1 393 011 B2**
(45) Veröffentlichungstag und Bekanntmachung des Hinweises auf die Entscheidung über den Einspruch: **08.05.2013**
(45) Hinweis auf die Patenterteilung: 18.11.2009
(21) Anmeldenummer: 02742959.6
(22) Anmeldetag: 06.05.2002
(51) Int. Cl.: G01B 5/012, G01B 7/012, G01B 21/04

(54) **TASTKOPF FÜR EIN KOORDINATENMESSGERÄT**
PROBE FOR A COORDINATE MEASURING DEVICE
SONDE POUR APPAREIL DE MESURE DE COORDONNEES

(30) Priorität: 08.05.2001 DE 10122200
(43) Veröffentlichungstag der Anmeldung: 03.03.2004
(60) Teilanmeldung: 09014228.2
(73) Patentinhaber: Carl Zeiss Industrielle Messtechnik GmbH, 73447 Oberkochen (DE)
(72) Erfinder: RUCK, Otto, 73479 Pfahlheim (DE)
(74) Vertreter: Schorr, Frank Jürgen
(86) Internationale Anmeldenummer: PCT/EP2002/004986
(87) Internationale Veröffentlichungsnummer: WO 2002/090877

(56) Entgegenhaltungen:
- EP-A- 0 389 108
- EP-A- 0 508 686
- EP-A- 0 786 644
- EP-B1- 0 544 854
- WO-A1-00/60307
- GB-A- 1 599 758
- GB-A- 1 599 758
- GB-A- 2 042 189
- US-A- 4 136 458
- US-A- 4 136 458
- US-A- 4 158 919
- US-A- 4 498 043
- US-A- 4 498 043
- US-A- 5 074 052
- US-A- 5 074 052
- US-A- 5 848 477
- D.F. GIBBS SPRING DIAPHRAGMS, LABORATORY AND WORKSHOP NOTES Bd. 34, 01 Januar 1957, Seiten 34 - 35, XP55029685
- P.H. SYDENHAM: 'Elastic design of fine mechanism in instruments' J. PHYS. E: SCI. INSTRUM. Bd. 17, 01 Januar 1984, Seiten 922 - 930, XP55029682

## Beschreibung

Die Erfindung betrifft ein Koordinatenmeßgerät mit einem Taststift zum Antasten eines Werkstückes und einen Tastkopf für ein Koordinatenmeßgerät, wobei der Tastkopf zur Halterung des Taststiftes an dem Koordinatenmeßgerät und zur Registrierung eines Kontaktes zwischen Taststift und Werkstück vorgesehen ist.

Herkömmliche Koordinatenmeßgeräte weisen eine Werkstückhalterung zur Anbringung eines zu vermessenden bzw. anzutastenden Werkstückes und einen bezüglich der Werkstückhalterung räumlich verfahrbaren Tastkopf auf. An dem Tastkopf ist ein Taststift in einer Ruhelage bezüglich des Tastkopfes gehaltert, wobei Auslenkungen des Taststiftes aus dieser Ruhelage gegen Federkraft von dem Tastkopf registriert werden. Zur Bestimmung von Koordinaten einer Oberfläche des Werkstückes wird der Tastkopf bezüglich der Werkstückhalterung räumlich verfahren, bis eine Spitze des Taststiftes, welche beispielsweise die Gestalt einer Kugel oder Scheibe aufweisen kann, mit der Oberfläche des Werkstückes in Berührungskontakt kommt. Dies führt zu einer Auslenkung der Tastspitze aus ihrer Ruhelage, welche von dem Tastkopf registriert wird. Sodann werden die Relativpositionen des Tastkopfes bezüglich der Werkstückhalterung und damit bei ebenfalls ermittelter Größe der Auslenkung die Koordinaten der Werkstückoberfläche in einem wählbaren Koordinatensystem bestimmt. Es können auf ähnliche Weise weitere Koordinaten von Oberflächenpunkten des Werkstückes ermittelt werden. Es ist ebenfalls möglich, den Tastkopf relativ zu dem Werkstück so zu verfahren, daß der Taststift mit einer vorbestimmten Anlagekraft gegen die Werkstückoberfläche gedrückt wird, indem eine Auslenkung des Taststiftes aus seiner Ruhelage während der Bewegung derart aufrechterhalten wird, daß die die Ruhelage definierende Feder die gewünschte Andruckkraft der Tastspitze an die Werkstückoberfläche bereitstellt.

Hierzu ist es notwendig, daß die Ruhelage des Taststiftes relativ zu dem Tastkopf wohldefiniert ist, daß die Feder eine definierte und reproduzierbare Rückstellkraft in Abhängigkeit von der Auslenkung des Taststiftes aus der Ruhelage bereitstellt, und daß die Auslenkung des Taststiftes aus der Ruhelage von einem hierzu vorgesehenen Auslenkungsmeßsystem mit ausreichender Präzision erfaßt wird.

Aus DE 24 40 692 B1 ist ein Tastkopf für ein Koordinatenmeßgerät bekannt, bei dem ein Taststift an einem Tastkopfchassis über ein Membranfedersystem gehalten ist, wobei das Membranfedersystem an einem Ort des Taststiftes angreift und diesen um diesen Ort in zwei Raumrichtungen schwenkbar lagert, wobei das Membranfedersystem auch Auslenkungen dieses Ortes in Längsrichtung des Taststiftes erlaubt. Von dem Ort, an dem das Membranfedersystem an den Taststift angreift, erstreckt sich in eine der Taststiftspitze entgegengesetzte Richtung ein Fortsatz, der an drei jeweils orthogonal zueinander sich erstreckenden Stäben Ferritkerne trägt, von denen ein jeder in eine Sensorspule eintaucht. Über diese Spulen können Auslenkungen des Taststiftes aus seiner Ruhelage in drei Raumrichtungen elektrisch erfaßt werden.

Bei dem herkömmlichen Tastkopf sind die Federkräfte, die Auslenkungen aus der Ruhelage entgegenwirken, für die drei Raumrichtungen sehr unterschiedlich, was beim Antasten von schräg zum Tastkopf orientierter Flächen zu Meßungenauigkeiten führt. Ferner werden bei dem herkömmlichen Tastkopf die maximalen Auslenkwege als zu gering empfunden.

Ferner sind aus dem Stand der Technik gemäß US 4,498,043, GB 1 599 758, US 4,136,458 und US 5,074,052 Tastköpfe bekannt, bei welchen eine an einem Tastkopfchassis aus einer Ruhelage auslenkbar gehalterte Taststifthalterung durch Federkraft an einen Anschlag gedrückt wird, so dass die Taststifthalterung lediglich in eine Richtung relativ dem Tastkopfchassis auslenkbar ist.

Aus GB 2 042 189 A ist ein Tastkopf bekannt, bei welchem eine Taststifthalterung lediglich über eine Blattfeder an ein Tastkopfchassis angelenkt ist, so dass die Taststifthalterung relativ zu dem Tastkopfchassis sowohl in sämtliche Raumrichtungen verlagerbar als auch verschwenkbar ist.

WO 00/60307 offenbart einen Tastkopf für ein Koordinatenmeßgerät, umfassend:
ein an dem Koordinatenmeßgerät anbringbares Tastkopfchassis,
eine an dem Tastkopfchassis aus einer Ruhelage auslenkbar gehalterte starre Taststifthalterung mit einer Längsachse,
eine Federanordnung zur Bereitstellung einer Federkraft zur Rückführung der Taststifthalterung in die Ruhelage, und
eine an dem Tastkopfchassis vorgesehene Führung , welche an die Taststifthalterung an einem ersten Ort Längsachse angreift und den ersten Ort der Taststifthalterung bezüglich dem Tastkopfchassis in einer Richtung verlagerbar führt, die im wesentlichen mit der Längsrichtung zusammenfällt,
wobei die Federanordnung einerseits an dem Tastkopfchassis und andererseits an der Taststifthalterung an einem zweiten Ort der Längsachse festgelegt ist, der mit Abstand von dem ersten Ort angeordnet ist,
wobei die Taststifthalterung relativ zu dem Tastkopfchassis ferner in eine der Richtung entgegengesetzte Richtung aus der Ruhelage auslenkbar ist.

Es ist eine Aufgabe der vorliegenden Erfindung einen Tastkopf bereitzustellen, dessen Tastspitze aus einer wohldefinierten Ruhelage in drei zueinander orthogonale Raumrichtungen und die hierzu entgegengesetzten Raumrichtungen gegen Federkraft auslenkbar ist.

Ferner ist es eine Aufgabe der Erfindung, ein Koordinatenmessgerät mit einem solchen Tastkof bereitzustellen.

Zur Lösung wird ein Tastkopf mit den in den beiliegenden Ansprüchen 1, 4 und 5 definierten Merkmalen sowie ein Koordinatenmessgerät mit den in dem beiliegenden Anspruch 16 definierten Merkmalen vorgeschlagen. Bevorzugte Ausführungsformen der Erfindung sind in den abhängigen Ansprüchen definiert.

Die Erfindung geht aus von einem Tastkopf, der ein an dem Koordinatenmeßgerät anbringbares Tastkopfchassis, eine an dem Tastkopfchassis aus einer Ruhelage auslenkbar gehalterte Taststifthalterung mit einer Längsachse, eine Federanordnung zur Bereitstellung einer Federkraft zur Rückführung der Taststifthalterung in die Ruhelage und ein Auslenkungsmeßsystem zur Erfassung einer Auslenkung der Taststifthalterung bezüglich des Tastkopfchassis aufweist. An einem ersten Ort der Taststifthalterung greift hierbei eine an dem Tastkopfchassis vorgesehene Führung an, welche diesen ersten Ort relativ zu dem Tastkopfchassis in eine Richtung verlagerbar führt, die im wesentlichen mit der Längsrichtung zusammenfällt.

Die Erfindung zeichnet sich hierbei dadurch aus, daß die Federanordnung zur Rückstellung der Taststifthalterung in ihre Ruhelage an einem zweiten Ort der Taststifthalterung angreift, welcher von dem ersten Ort mit Abstand in Längsachse der Taststifthalterung angeordnet ist.

Der Erfindung liegt hierbei die Idee zugrunde, die Funktionen der Führung der Taststifthalterung in Längsrichtung und die Funktion der Rückstellung der Taststifthalterung in ihre Ruhelage voneinander zu entkoppeln, indem die diese beiden Funktionen bereitstellenden Komponenten mit Abstand voneinander an der Taststifthalterung angreifen. Hierdurch kann die Führung ihre Führungsfunktion, das heißt das Zulassen von Auslenkungen in Führungsrichtung und eine entsprechend starre Halterung quer zur Führungsrichtung besonders präzise erfüllen, wobei die Taststifthalterung um den Ort, an dem die Führung an diese angreift, schwenkbar ist. Die durch diese Verschwenkung erfolgte Auslenkung aus der Ruhelage wird durch die Federanordnung zurückgestellt, welche aufgrund des Abstandes zwischen Führung und Angriffsort der Federanordnung mit einer vergleichsweise guten Hebelwirkung die Rückstellkraft wohldosiert und reproduzierbar aufbringt. Ferner kann die von einer Führungsfunktion weitgehend befreite Federanordnung vergleichsweise einfach im Hinblick auf die Bereitstellung einer im wesentlichen richtungsabhängigen Stärke der Rückstellkraft ausgelegt werden.

Im Hinblick auf eine günstige Hebelwirkung der auf die Tastspitzenhalterung angreifenden Federkraft ist der zweite Ort zwischen der Tastspitze und dem Ort angebracht, an dem die Führung an die Taststifthalterung angreift.

Die Führung kann eine Gleitführung sein, welche beispielsweise eine an dem Tastkopfchassis festgelegte Gleitbuchse aufweist, in der die Taststifthalterung verschiebbar gelagert ist. Vorzugsweise ist die Führung jedoch so aufgebaut, daß in ihr keine Komponenten gleitend verschiebbar aneinander gelagert sind. Dies ist vorzugsweise durch eine Membran realisiert, welche in Membranebene im wesentlichen nicht komprimierbar bzw. dehnbar ist und eine Flexibilität in Membranquerrichtung aufweist. Vorzugsweise ist eine solche Membran durch eine Blattfeder gebildet, welche einerseits an dem Tastkopfchassis und andererseits an der Taststifthalterung festgelegt ist.

Eine leichtgängige Führungswirkung wird vorzugsweise dadurch erreicht, daß die Membran auf Seiten des Tastkopfchassis in einem Bereich festgelegt ist, der sich lediglich über einen Teilumfang des Tastkopfchassis um die Längsachse erstreckt. Dieser Bereich erstreckt sich vorzugsweise über weniger als 40° und stärker bevorzugt über weniger als 20° um die Längsachse.

Die Membran kann in Projektion entlang der Längsachse einen Außenumfang aufweisen, innerhalb dessen das Membranmaterial kontinuierlich und flächig vorgesehen ist. Vorzugsweise sind in das Membranmaterial allerdings Schlitze oder Schnitte eingebracht, so daß die Membran eine Mehrzahl Materialstreifen aufweist, die sich quer zur Umfangsrichtung um die Längsachse erstrecken.

Um eine möglichst geradlinige Führung der Taststifthalterung relativ zum Chassis zu erreichen, ist die wirksame Länge der Membran möglichst groß. Hierzu erstreckt sich die Membran vorzugsweise ausgehend von dem Ort, an dem sie am Chassis festgelegt ist, zur Längsachse und darüber hinaus bis zu dem Ort, an dem sie an einer an der Taststifthalterung vorgesehenen Membranhalterung festgelegt ist. Vorzugsweise ist die wirksame Länge der Membran wenigstens 1,2mal, stärker bevorzugt wenigstens 1,5mal größer als der Abstand zwischen dem Tastkopfchassis und der Längsachse im Bereich der Membran.

Die Federanordnung bestimmt die Ruhelage der Taststifthalterung bezüglich des Tastkopfchassis vorzugsweise sowohl in Längsrichtung als auch quer hierzu. Hierbei ist eine Ausbildung der Federanordnung als Spiralfeder oder Schraubenfeder bevorzugt, wobei die Spiral- bzw. Schraubenfeder einerseits an dem Tastkopfchassis und andererseits an der Tastspitzenhalterung festgelegt ist.

Gemäß einer bevorzugten Ausgestaltung der Erfindung stellt auch die Membrananordnung einen Teil der Federkraft bereit, die den Taststift in Längsrichtung in seiner Ruhelage hält. Es sind dann in der Ruhelage die Federanordnung und die Membran gegeneinander vorgespannt.

Vorzugsweise wird jedoch die Federkraft zur Definition der Ruhelage in Längsrichtung hauptsächlich durch die Federanordnung und in möglichst geringem Umfang durch die Membran bereitgestellt.

Ein weiterer Vorschlag der Erfinder geht aus von einem Tastkopf mit einem an dem Koordinatenmeßgerät anbringbaren Tastkopfchassis, einer an dem Tastkopfchassis aus einer Ruhelage auslenkbar gehalterten Taststifthalterung mit einer Längsachse und einem Auslenkungsmeßsystem zur Erfassung einer Auslenkung der Taststifthalterung bezüglich des Tastkopfchassis aus. Das Auslenkungsmeßsystem umfaßt eine Mehrzahl von Abstandssensoren, von denen ein jeder einerseits eine an der Taststifthalterung festgelegte Sensorkomponente und andererseits eine an dem Tastkopfchassis festgelegte Sensorkomponente umfaßt.

Hierbei sind die an dem Tastkopfchassis festgelegten Sensorkomponenten in Umfangsrichtung um die Längsachse verteilt angeordnet, wobei von den Abstandssensoren wenigstens einer eine taststifthalterungseitige Komponente aufweist, die mit Abstand in Längsrichtung von der zugehörigen chassisseitigen Sensorkomponente angeordnet ist.

Hierdurch bilden die mehreren Abstandssensoren gemeinsam ein Auslenkungsmeßsystem, welches die Erfassung der Auslenkung der Tastkopfhalterung aus der Ruhelage in deren drei räumlichen Freiheitsgraden ermöglicht. Es ist dabei nicht für jeden der räumlichen Freiheitsgrade ein separater Abstandssensor vorgesehen, vielmehr beeinflußt eine jede Auslenkung der Taststifthalterung immer mehrere Abstandssensoren, wobei allerdings die von den Abstandssensoren bereitgestellten Meßsignale derart miteinander verrechnet werden können, daß die tatsächliche Auslenkung aus der Ruhelage als Absolutwert bestimmbar ist.

Hierzu sind wenigstens zwei Abstandssensoren notwendig. Vorzugsweise sind jedoch drei oder mehrere Abstandssensoren vorgesehen, welche dann, weiter bevorzugt, gleichmäßig verteilt um die Längsachse angeordnet sind.

Im Hinblick auf eine vorteilhafte Symmetrie zwischen den von den Abstandssensoren ausgegebenen Meßsignalen sind mehrere der an dem Tastkopfchassis vorgesehenen Sensorkomponenten vorzugsweise in einer gemeinsamen Ebene angeordnet, die sich vorzugsweise orthogonal zur Längsachse der Tastkopfhalterung in deren Ruhelage erstreckt.

Im Hinblick auf eine einfache Ausgestaltung des Auslenkungsmeßsystemes und einfach auswertbare Signale der Abstandssensoren sind die an der Taststifthalterung vorgesehenen Sensorkomponenten vorzugsweise in eine einzige Komponente zusammengefaßt, das heißt es ist an der Taststifthalterung eine Sensorkomponente vorgesehen, welche für mehrere der Abstandssensoren die taststifthalterungseitige Komponente bildet.

Die taststifthalterungseitige Sensorkomponente ist vorzugsweise als Sender ausgebildet, welcher ein Signalfeld emittiert, welches von den mehreren chassisseitigen Sensorkomponenten empfangen wird. Hierbei ist beispielsweise die Empfangsintensität des Signalfeldes an den Orten der chassisseitigen Sensorkomponenten, das heißt den Empfängern, vom Abstand zum Sender abhängig, und über eine entsprechende Auswertung können dann der Ort, an dem der Sender an der Taststifthalterung festgemacht ist, relativ zum Chassis und damit auch die Auslenkung der Taststifthalterung aus ihrer Ruhelage bestimmt werden.

Aus den von dem Auslenkungsmeßsystem bereitgestellten Sensorsignalen ist die Auslenkung der Taststiftspitze aus der Ruhelage bestimmbar, sofern das System entsprechend kalibriert ist.

Weiterhin vorgeschlagen wird hier ein Verfahren zum Kalibrieren eines Koordinatenmeßgerätes, in dem zunächst ein Taststiftspitzenhalter im Verfahrbereich der Tastspitze fest angeordnet wird und die Taststiftspitze in Eingriff mit dem Tastspitzenhalter gebracht wird. Der Eingriff bewirkt eine Haltekraft, die den Taststift ortsfest bezüglich der Werkstückhalterung hält. Es wird sodann der Tastkopf an dem Koordinatenmeßgerät um vorbestimmte Strecken verfahren, was, da die Tastspitze ortsfest gehalten ist, zu definierten Auslenkungen des Taststiftes aus der Ruhelage führt. Es werden dann bei dieser definierten Auslenkung die von dem Auslenkungsmeßsystem bereitgestellten Meßsignalmuster registriert und in geeigneter Weise gespeichert. Treten solche Meßsignalmuster dann später während des Antastbetriebes an ein Werkstück auf, so kann aus dem Auftreten der Meßsignale auf die entsprechende Auslenkung aus der Ruhelage geschlossen werden.

Vorzugsweise wird der Meßkopf um eine Mehrzahl von jeweils verschiedenen Strecken verschiedener Länge und verschiedener Richtung verfahren, und zu einer jeden Strecke werden die zugehörigen Meßsignalmuster registriert. Hierdurch ist dann der Meßkopf bezüglich Auslenkungen in allen drei Raumrichtungen kalibrierbar.

Vorzugsweise weist der Taststiftspitzenhalter eine Anlagefläche für die Spitze des Taststiftes sowie eine Kraftfeldquelle zur Bereitstellung einer Haltekraft auf, die die Taststiftspitze in Eingriff mit der anlagefläche hält. Dies hat den Vorteil, daß zum einen eine wohldefinierte Anlagefläche für die Taststiftspitze bereitgestellt werden kann und zum anderen nach Eingriff zwischen Taststift und Taststiftspitzenhalter der Tastkopf in eine Richtung verfahren werden kann, die einen Zug des Taststiftes weg von dem Taststiftspitzenhalter erzeugt. Dadurch ist es möglich, Auslenkungen in Längsrichtung des Taststiftes in die beiden entgegengesetzten Richtungen zu kalibrieren.

Als Kraftfeldquelle ist vorzugsweise eine Magnetfeldquelle vorgesehen, beispielsweise durch einen Permanentmagnet oder/und einen Elektromagnet. Der Elektromagnet hat dabei den Vorteil, daß der Eingriff zwischen Taststift und Taststiftspitzenhalter durch Abschalten des Elektromagneten einfach lösbar ist.

Um eine wohldefinierte Anlagefläche bereitzustellen, ist vorzugsweise ein Dreipunktkontakt für die Tastspitze durch die Anlagefläche bereitgestellt, was vorzugsweise durch drei nebeneinander angeordnete Kugelkalotten erfolgt.

Ebenfalls bevorzugt ist ein Taststiftspitzenhalter, welcher als Greifer ausgebildet ist, um den Taststift oder eine Komponente hiervon nach Art einer Zange zu ergreifen.

Ausführungsformen der Erfindung und weitere Beispiele werden nachfolgend anhand von Figuren näher erläutert. Hierbei zeigt:
- Figur 1: eine Ausführungsform eines erfindungsgemäßen Koordinatenmeßgerätes,
- Figur 2: eine erste Ausführungsform eines erfindungsgemäßen Tastkopfes zur Anbringung an einem Koordinatenmeßgerät in perspektivischer aufgeschnittener Darstellung,
- Figur 3: eine perspektivische Detaildarstellung des Tastkopfes der Figur 2,
- Figur 4: eine weitere perspektivische Detaildarstellung des Tastkopfes der Figur 2,
- Figur 5: eine schematische Erläuterung zur Funktion eines Auslenkungsmeßsystemes des Tastkopfes der Figur 2,
- Figur 6: eine elektrische Schaltung zum Betrieb des Auslenkungsmeßsystemes des Tastkopfes der Figur 2,
- Figur 7: eine schematische Darstellung eines Kalibrierkörpers im Schnitt,
- Figur 8: den Kalibrierkörper der Figur 7 im Schnitt entlang einer Linie VIII-VIII der Figur 7,
- Figur 9: eine schematische Darstellung eines Teils einer Steuerung für das Koordinatenmeßgerät der Figur 1,
- Figur 10: eine Variante einer Membranfeder des Tastkopfes der Figur 2,
- Figur 11: eine weitere Variante der Membranfeder des Tastkopfes der Figur 2 und
- Figur 12: eine zweite Ausführungsform eines Tastkopfes zur Anbringung an einem Koordinatenmeßgerät.

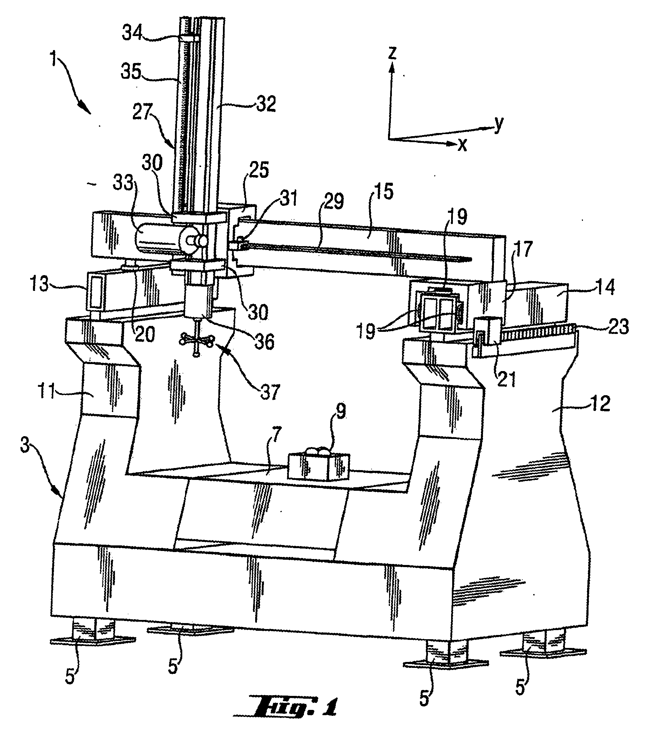

Figur 1 zeigt eine Ausführungsform eines erfindungsgemäßen Koordinatenmeßgerätes 1 in perspektivischer Darstellung. Dieses Koordinatenmeßgerät entspricht in seinem Grundaufbau dem in Dokument DE 198 21 274 A1 beschriebenen Koordinatenmeßgerät, wobei die Offenbarung dieses Dokumentes durch Inbezugnahme vollumfänglich in die vorliegende Anmeldung aufgenommen wird. Das Koordinatenmeßgerät 1 umfaßt einen Sockel 3 mit vier Standfüßen 5. Der Sockel 3 trägt in seiner Mitte eine Werkstückhalterung 7, auf der ein zu vermessendes Werkstück anbringbar ist, wobei in Figur 1 auf dem Werkstückhalter gerade ein Kalibrierkörper 9 zum Kalibrieren des Koordinatenmeßgerätes angeordnet ist.

Beidseits der Werkstückhalterung erstrecken sich an dem Sokkel 3 Streben 11, 12 nach oben, welche zwei beidseits der Werkstückhalterung angeordnete in einer horizontalen y-Richtung und parallel zueinander sich erstreckende Längsführungen 13, 14 tragen. In Horizontalrichtung senkrecht (x-Richtung) zu den Längsführungen 13, 14 erstreckt sich eine Querführung 15, welche an den Längsführungen 13, 14 in y-Richtung verschiebbar gelagert ist. Hierzu ist an einem Ende der Querführung 15 ein Führungsprofil 17 vorgesehen, welches die Längsführung 14 von oben U-förmig umgreift und an welchem mehrere Luftkissen 19 vorgesehen sind, mit denen die Querführung 15 an der Längsführung 14 abgestützt ist. Mit ihrem anderen Ende ist die Querführung 15 mit einem weiteren Luftkissen 20 auf der Oberseite der Längsführung 17 abgestützt und damit auch gegenüber dieser in y-Richtung verschiebbar gelagert. Durch einen motorischen Antrieb kann die Querführung 15 entlang der Längsführung 14 verschoben werden, wobei eine entsprechende Verschiebestellung über einen an dem Sockel 3 festgelegten Maßstab 23 und einen zugehörigen an dem U-Profil 17 festgelegten Sensor 21 abgelesen wird.

An der Querführung 15 ist über ein Führungsprofil 25 eine Vertikalführung 27 in x-Richtung verschiebbar gelagert, wobei die Verschiebestellung wiederum über einen an der Querführung 15 angebrachten Maßstab 29 und einen an dem Profil 25 festgemachten Sensor 31 abgelesen wird.

An dem Führungsprofil 25 sind zwei weitere mit Abstand voneinander angeordnete Führungsprofile 30 vorgesehen, welche eine sich in senkrechter Richtung (z-Richtung) erstreckende Stange 32 über einen Motor 33 verschiebbar lagern. Die Verschiebestellung der Stange 37 in z-Richtung wird über einen an der Stange 32 vorgesehenen Sensor 34 erfaßt, der die Position an einem an der Vertikalführung 27 vorgesehenen Maßstab 35 abliest.

An einem unteren Ende der Stange 31 ist ein Tastkopf 36 angebracht, welcher einen Taststift 37 mit mehreren Tastspitzen zum Antasten eines auf der Werkstückhalterung angebrachten Werkstückes 9 zeigt.

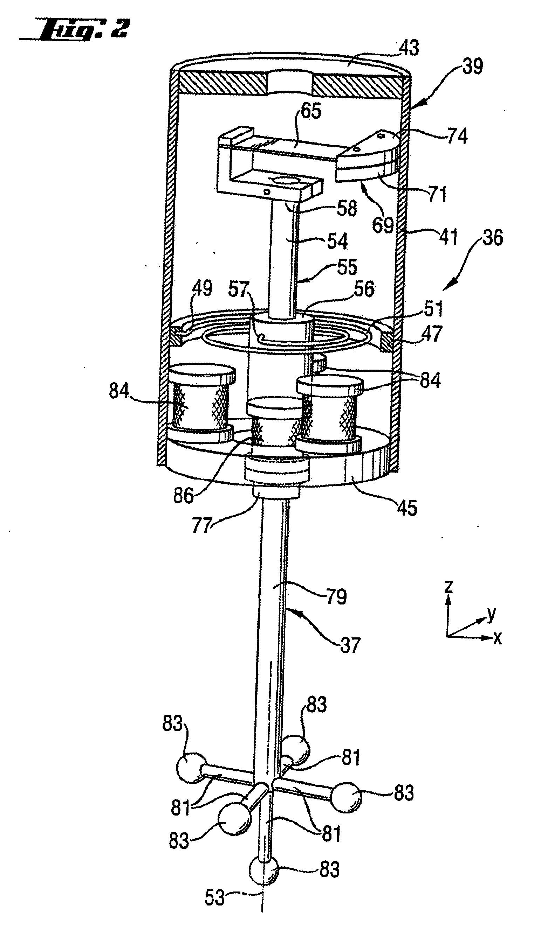

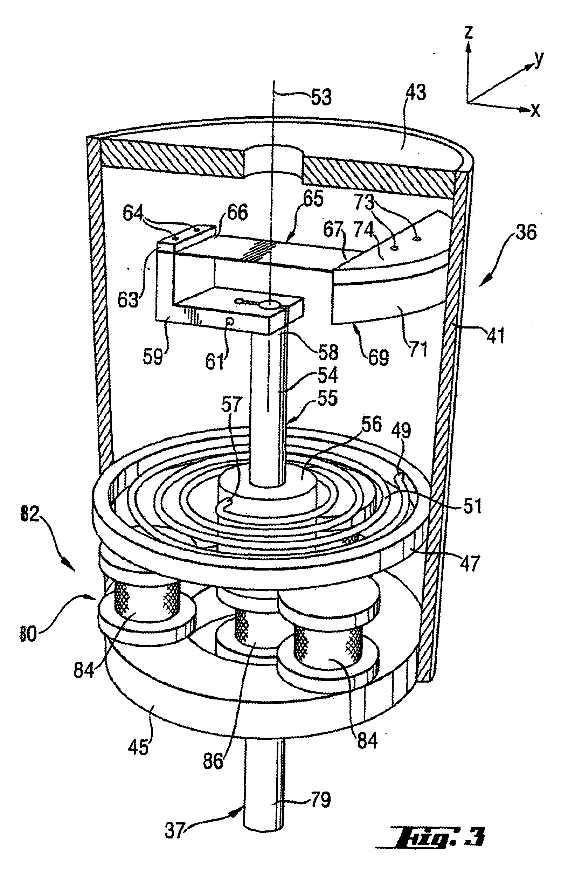

Der Tastkopf 36 ist in den Figuren 2, 3 und 4 im Detail dargestellt. Er umfaßt ein Gehäuse bzw. Chassis 39 mit einem zylindrischen Mantel 41, einem oberen Deckel 43 und einem unteren Deckel 45. In einem mittleren Bereich des Mantels 41 ist an dessen Innenwand ein Ring 47 befestigt, an dem ein radial äußeres Ende 49 einer Spiralfeder 51 befestigt ist. Die Spiralfeder 51 erstreckt sich in der Horizontalebene (x-y) mit mehreren Windungen um eine Längsachse 53 einer Taststifthalterung 55 nach radial innen, wobei die Spiralfeder 51 mit ihrem anderen radial inneren Ende 57 an einem in Längsrichtung 53 mittleren Bereich 56 der Taststifthalterung 55 befestigt ist. Die Spiralfeder 51 hält die Taststifthalterung 55 bezüglich dem Gehäuse 39 in der in den Figuren dargestellten Ruhestellung, wobei sie eine Federkraft bereitstellt, die die Taststifthalterung bei Auslenkungen ihres mittleren Bereiches 56 in die gezeigte Ruhestellung zurückdrängt, wobei die entsprechenden Rückstellkräfte in z-Richtung, x-Richtung und y-Richtung wirken.

Von dem mittleren Bereich 56 der Taststifthalterung 55 erstreckt sich eine Stange 54 nach oben, an deren oberem Ende 58 ein Winkelteil 59 mittels einer Schraube 61 festgeklemmt ist. Das Winkelteil 59 erstreckt sich ausgehend von dem oberen Ende der Stange 54 entgegen der x-Richtung zunächst zu dem Gehäusemantel 41 hin und sodann, ohne das Gehäuse zu berühren, in z-Richtung nach oben. Am oberen Ende des Winkelteiles 59 ist mittels eines Klötzchens 63 und Schrauben 64 eine Blattfeder 65 mit ihrem einen Ende 66 derart eingespannt, daß sie sich ausgehend von dem oberen Ende des Winkelteiles 59 in x-Richtung zurück zu der Längsachse 53 hin, über diese hinaus zu dem Gehäusemantel 41 hin erstreckt. Mit ihrem anderen Ende 67 ist die Blattfeder 65 in einer Halterung 69 eingespannt, die an dem Mantel 41 des Gehäuses 39 festgelegt ist. Hierzu weist die Halterung 69 ein an dem Mantel befestigtes Unterteil 71 sowie ein mittels Schrauben 73 gegen das Unterteil 71 gepreßtes Oberteil 74 auf, wobei das Federende 67 zwischen Unterteil 71 und Oberteil 74 eingespannt ist.

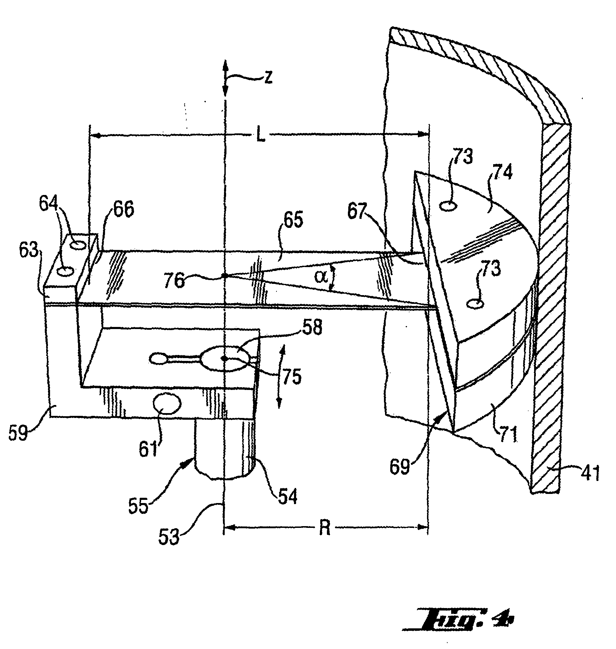

In Figur 4 ist ein Durchstoßpunkt 76 der Langsachse 53 durch die Blattfeder 65 dargestellt. In Figur 4 ist ferner ein Umfangswinkel α dargestellt, der angibt, über welchen Umfang um die Längsachse 53 die Blattfeder 65 auf Seiten des Gehäuses 39 eingespannt ist. In der dargestellten Ausführungsform beträgt dieser Winkel etwa 15°, die Blattfeder 65 ist also lediglich an einem kleinen Teil des Umfangs des Gehäuses 39 um die Längsrichtung 53 festgelegt.

Wie am besten aus Figur 4 ersichtlich ist, stellt die Blattfeder 65 für das obere Ende 58 der Taststifthalterung 55 eine Führung bereit, die eine Verlagerung des oberen Endes 58 in Richtung eines Pfeiles 75, der sich in etwa in z-Richtung erstreckt, leichtgängig erlaubt und andererseits Verlagerungen des oberen Endes 58 in einer Ebene senkrecht zur Richtung 75 praktisch nicht ermöglicht. Diese Art der Führung liegt an der Eigenschaft der Blattfeder 65 in einer Richtung senkrecht zu ihrer Membranebene (z-Richtung) flexibel zu sein und in den Richtungen einer senkrecht hierzu orientierten Ebene im wesentlichen starr ausgebildet zu sein. Bei der in Figur 4 dargestellten Anordnung der Blattfelder fällt die Richtung 75 wenigstens bei kleinen Auslenkungen in z-Richtung im wesentlichen mit der Längsachse 53 bzw. z-Richtung zusammen, wobei allerdings das obere Ende 58 der Taststifthalterung 55 durch die Blattfeder 65 entlang einer gekrümmten Bahn geführt wird. Die Krümmung dieser Bahn ist allerdings vergleichsweise groß und durch die volle Länge L der Blattfeder 65, das heißt den Abstand zwischen ihren in der Halterung 69 und an dem Winkelstück 59 eingespannten Enden 67, 66, bestimmt. Damit ist die Krümmung insbesondere größer als die eines Kreises, der einen Radius R aufweist, der dem Abstand zwischen dem an der Halterung 69 eingespannten Ende 67 der Blattfeder 65 und der Längsachse 53 entspricht.

An einem unteren Ende 77 der Taststifthalterung 55 ist in diese ein Schaft 79 des Taststiftes 37 derart eingeschraubt, daß sich auch der Schaft 79 auf der Längsachse 53 der Taststifthalterung 55 erstreckt. An einem unteren Ende des Schaftes 79 sind an diesem wiederum fünf Zweigschäfte 81 befestigt, welche sich in die Richtungen -z, +x, -x, +y und -y von dem unteren Ende des Schafts 79 weg erstrecken. Ein jeder Zweigschaft 81 trägt an seinem Ende eine Rubinkugel 83, welche zum Kontakt mit dem zu vermessenden Werkstück vorgesehen ist und damit eine Taststiftspitze bildet.

Wird der Tastkopf 36 von oben an ein Werkstück angenähert und in Kontakt mit dem Werkstück gebracht, so sind die Bewegungsfreiheitsgrade dieser Kugel durch die Werkstückoberfläche beschränkt, und eine weitere Bewegung des Tastkopfes durch das Koordinatenmeßgerät relativ zu dem Werkstück führt zu einer Auslenkung der berührenden Kugel 83 bezüglich des Tastkopfgehäuses 39. Zusammen mit der Kugel 83 werden der Taststift 37 und der Taststifthalter 55 relativ zu dem Gehäuse 39 ausgelenkt, da diese zusammen ein starres System bilden. Die Auslenkung der Kugel 83 in Horizontalrichtung (x-, y-Richtungen) führt zu einem Verschwenken des Systems aus Taststift 37 und Taststifthalter 55 um das obere Ende 58 des Taststifthalters 55, da dieses obere Ende 58 aufgrund der Starrheit der Feder 65 in diese Richtungen nicht auslenkbar ist. Eine Auslenkung der Kugel 83 bezüglich des Gehäuses 39 in z-Richtung führt zu einer Verlagerung des oberen Endes 58 der Taststifthalterung 55 in Richtung 75, die in etwa mit der z-Richtung zusammenfällt.

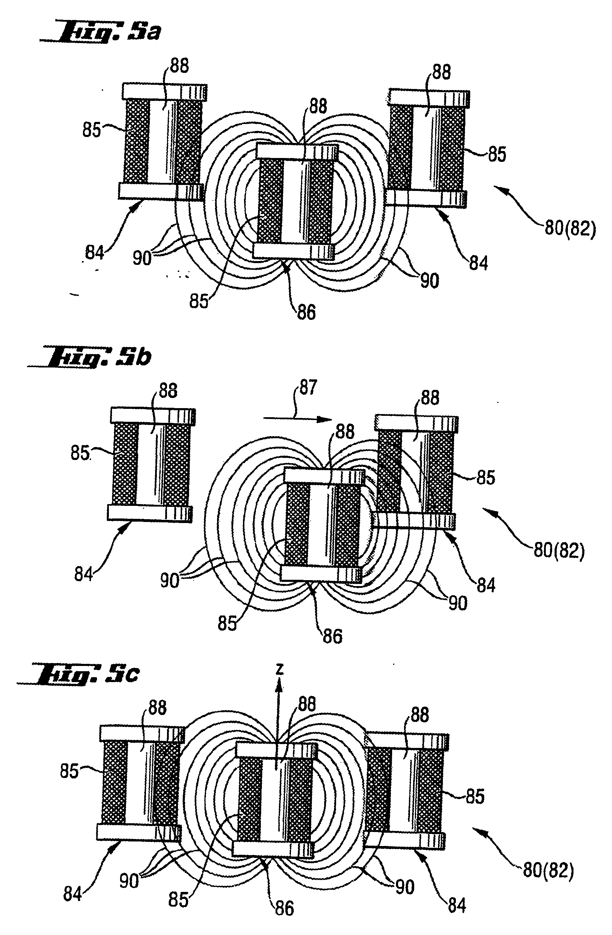

Die Auslenkungen der Kugel 83 in den drei Raumrichtungen führen damit ebenfalls zu Auslenkungen in drei Raumrichtungen des mittleren Bereiches 56 der Taststifthalterung 55 relativ zu dem Gehäuse 41. Diese Auslenkungen werden von einem Auslenkungsmeßsystem 80 erfaßt, welches einen Satz 82 aus drei Abstandssensoren umfaßt. Ein jeder Abstandssensor weist eine Komponente 84 auf Seiten des Gehäuses 39 und eine Komponente 86 auf Seiten der Taststifthalterung 55 auf. Hierbei sind die taststifthalterungsseitigen Komponenten der drei Abstandssensoren in einer einzigen Komponente zusammengefaßt, nämlich einer elektromagnetischen Sendespule, die eine auf einen Wickelkern 88 aufgewickelte Stromleiterwicklung 85 umfaßt (vgl. Figur 5). Die Komponenten 84 der drei Abstandssensoren, die auf Seiten des Gehäuses 39 angeordnet sind, sind durch drei elektromagnetische Empfängerspulen gebildet, von denen eine jede ebenfalls eine auf einen Kern 88 aufgebrachte Wicklung 85 aufweist. Die gehäuseseitigen Spulen 84 sind auf dem unteren Gehäusedeckel 45 in einer gemeinsamen Ebene und gleichmäßig um die Längsachse 53 verteilt angeordnet. Die taststifthalterungsseitige Sendespule 86 ist zentral zur Längsachse 53 und dabei mit vertikalem Abstand unterhalb der Ebene der Empfängerspulen 84 angeordnet.

Das Funktionsprinzip des Auslenkungsmeßsystemes 80 ist anhand der Figuren 5a bis 5c erläutert. Figur 5a zeigt eine Situation, in der sich der Taststifthalter 55 in seiner Ruhelage bezüglich des Gehäuses 39 befindet. Die Sendespule 86 emittiert ein elektromagnetisches Feld, dessen Feldlinien in Figur 5 mit 90 bezeichnet sind und dessen Intensität mit zunehmendem Abstand von der Sendespule 86 abnimmt. Dieses emittierte Feld wird von den Empfängerspulen 84 empfangen, wobei die Empfangsstärke ebenfalls von dem Abstand zwischen Sendespule 86 und der entsprechenden Empfangsspule 84 abhängt. In Figur 5a ist die Sendespule 86 mittig zwischen den Empfängerspulen 84 angeordnet, so daß sämtliche Empfängerspulen 84 eine im wesentlichen gleiche Feldintensität registrieren und entsprechend im wesentlichen gleiche Meßsignale abgeben.

In Figur 5b ist eine Situation dargestellt, in der der Taststift 37 aus seiner Ruhelage horizontal ausgelenkt ist. Dies führt, im Vergleich zu der in Figur 5a gezeigten Situation, zu einer horizontal in Richtung eines Pfeils 87 verlagerten Sendespule 86, mit der Folge, daß wenigstens eine der drei Empfängerspulen 84 eine erhöhte Feldintensität registriert und wenigstens eine andere der drei Empfängerspulen 84 eine erniedrigte Feldstärke registriert. Aus dem Unterschied der von den einzelnen Empfängerspule 84 registrierten Intensitäten kann damit die horizontale Auslenkung des Taststiftes 37 sowohl hinsichtlich ihrer Richtung als auch ihres Betrages bestimmt werden.

Figur 5c zeigt eine Situation, in der, im Vergleich zu der Figur 5a, der Taststift in z-Richtung nach oben verlagert ist. Dies führt gegenüber der Figur 5a zu einer Erhöhung der registrierten Feldintensitäten von sämtlichen Empfängerspulen 84, da die Sendespule 86 und sämtliche Empfängerspulen 84 gleichmäßig einander angenähert sind. Umgekehrt würde eine Auslenkung des Taststiftes 37 nach unten (-z-Richtung) zu einer Verringerung der von sämtlichen Empfängerspulen 84 registrierten Feldintensitäten führen. Somit kann durch Auswertung einer Summe oder eines Mittelwertes der von den Empfängerspulen 84 registrierten Intensitäten die Auslenkung des Taststiftes in z-Richtung ermittelt werden, und durch Auswertung von Differenzen der von den Spulen 84 empfangenen Intensitäten kann die Auslenkung des Taststiftes 37 in Horizontalrichtung erfaßt werden.

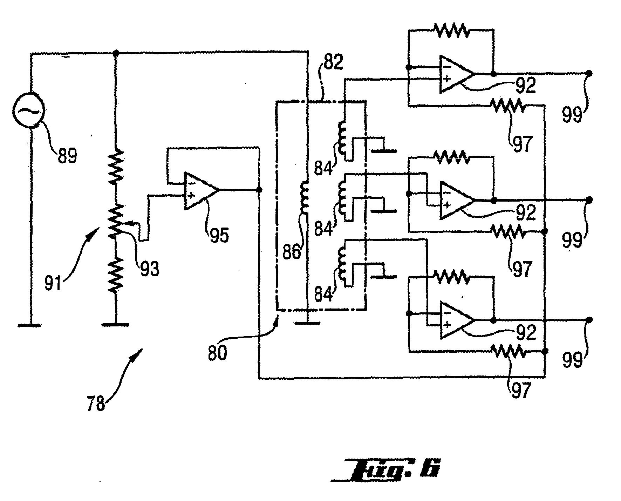

Figur 6 zeigt schematisch eine vereinfachte Schaltung 78 des Auslenkungsmeßsystems 80 zum Betrieb der Abstandssensoren 82. Die Sendespule 86 wird von einer Hochfrequenzspannungsquelle 89 gespeist, so daß sie das elektromagnetisches Wechselfeld 90 emittiert. Die durch das Hochfrequenzfeld 90 in den Empfängerspulen 84 induzierte Spannung wird jeweils einem nicht invertierenden Eingang eines Verstärkers 92 zugeführt. Einem invertierenden Eingang eines jeden Verstärkers 92 wird eine Spannung zugeführt, die der Erregungsspannung der Sendespule 81 entspricht. Die den invertierenden Eingängen der Verstärker 92 zugeführten Spannungen werden gewonnen, indem an einem parallel zu der Hochfrequenzspannungsquelle 89 geschalteten Spannungsteiler 91 mit Potentiometer 93 eine Spannung abgegriffen wird, diese einem Spannungsfolger 95 zugeführt wird und dessen Ausgabe über Widerstände 97 an die jeweiligen invertierenden Eingänge der Verstärker 92 geführt wird. Die Ausgaben der drei Verstärker 92 werden an drei Anschlüssen 99 bereitgestellt.

In einer Ruhelage des Taststiftes 37 wird das Potentiometer 93 derart eingestellt, daß die an den einzelnen Anschlüssen 99 ausgegebenen Spannungen minimal sind und insbesondere nahezu Null sind. Sodann führt eine jede Änderung der Abstandsbeziehung zwischen der Sendespule 86 und den Empfängerspulen 84 zu Änderungen der an den Anschlüssen 99 ausgegebenen Spannungen in die eine oder in die andere Richtung, woraus die Größe der Auslenkung nach der in Zusammenhang mit den Figuren 5a bis 5c erläuterten Weise erfolgen kann.

Da die Änderung der an den Anschlüssen 99 ausgegebenen Signale in Abhängigkeit von der Auslenkung der Tastspitze zwar prinzipiell berechenbar ist, allerdings von vielen Parametern abhängt, ist es vorteilhaft, das Auslenkungsmeßsystem zu kalibrieren, das heißt gezielt bekannte Auslenkungen herbeizuführen und in Abhängigkeit von einer jeden bekannten Auslenkung die an den Anschlüssen 99 ausgegebenen Meßsignale aufzuzeichnen. Umgekehrt kann dann während des Betriebes aus dem Auftreten eines ausgegebenen Meßsignalmusters auf die zugehörige Auslenkung geschlossen werden.

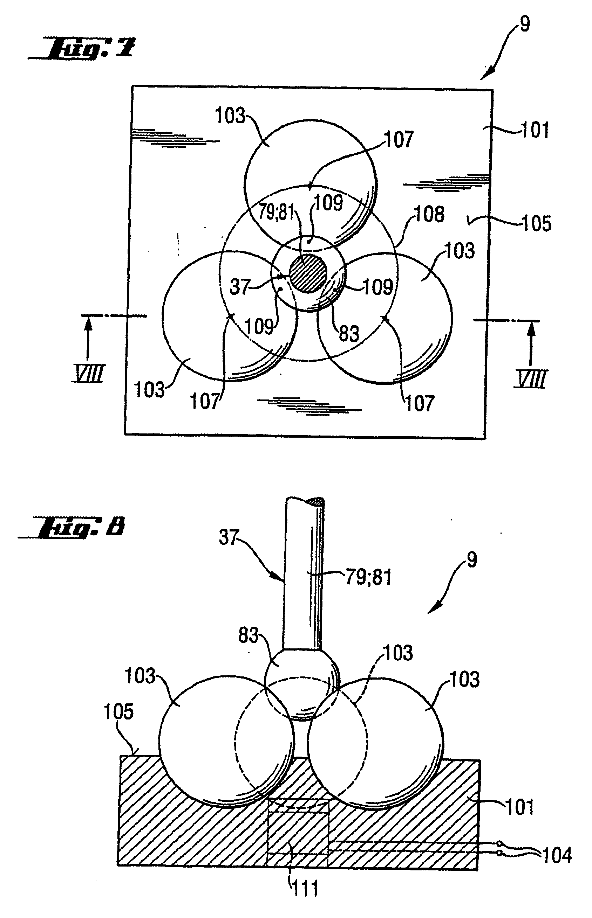

Hierzu wird eine der Tastspitzen 83 in Eingriff mit dem in den Figuren 7 und 8 im Detail gezeigten Kalibrierkörper 9 gebracht. Der Kalibrierkörper 9 umfaßt einen Basisblock 101, in den drei gleich große Kugeln 103 derart eingebettet sind, daß sie an einer Oberseite 105 des Blockes 101 vorstehen. In der Draufsicht der Figur 7 sind die Mittelpunkte 107 der drei Kugeln 103 auf einem Kreis 108 gleichmäßig verteilt angeordnet.

Der Durchmesser der Kugeln 103 und deren Abstand voneinander ist so auf den Durchmesser der Rubinkugel 83 des Taststiftes 37 angepaßt, daß die Rubinkugel 83, wenn sie von oben in das Zentrum zwischen den Kalibrierkörperkugeln 103 bewegt wird, an allen drei Kugeln zur Anlage kommt, und zwar an Anlagepunkten, die in der Projektion der Figur 7 mit den Bezugszeichen 109 bezeichnet sind.

In dem Sockel 101 ist ferner zentral ein Elektromagnet 111 vorgesehen, dem über Anschlußdrähte 104 dann Strom zugeführt wird, wenn die Tastspitze 83 in Anlagekontakt mit den Kalibrierkörperkugeln 103 steht. Der Elektromagnet 101 erzeugt ein Magnetfeld, welches den Schaft 79, der einen entsprechenden Eisenanteil aufweist, nach unten zieht und auch dann, wenn Zugkräfte nach oben auf den Schaft 79 wirken, die Tastspitze 83 in Anlagekontakt an den Kalibrierkörperkugeln 103 in den Punkten 109 hält.

Bei derart festgehaltener Tastspitze 83 wird der Tastkopf 36 durch Betätigung des Koordinatenmeßgerätes 1 um vorbestimmte Strecken verfahren, und es werden die dem Verfahrstrecken zugehörigen Signalmuster an den Anschlüssen 99 abgegriffen und gespeichert. Durch Untersuchung der Signalmuster in Abhängigkeit von den Verfahrstrecken ist der Tastkopf 36 und sein Auslenkungsmeßsystem 80 somit kalibrierbar. Insbesondere sind mit diesem Kalibrierkörper 9 auch Auslenkungen des Taststiftes 37 in negativer z-Richtung kalibrierbar, wie sie im Betrieb dann auftreten, wenn mit den Tastspitzen 83, die an den sich horizontal erstreckenden Zweigstiften 81 angeordnet sind, Hohlräume ausgetastet werden.

Soll nach der Kalibrierung ein Werkstück angetastet werden, so wird zunächst die Zuführung des Stromes über die Anschlüsse 104 an den Elektromagneten 101 eingestellt, es wird sodann die Tastspitze 83 von dem Kalibrierkörper 9 weg bewegt, woraufhin der Kalibrierkörper 9 von der Werkstückhalterung 7 entfernt und durch ein zu vermessendes Werkstück ersetzt werden kann.

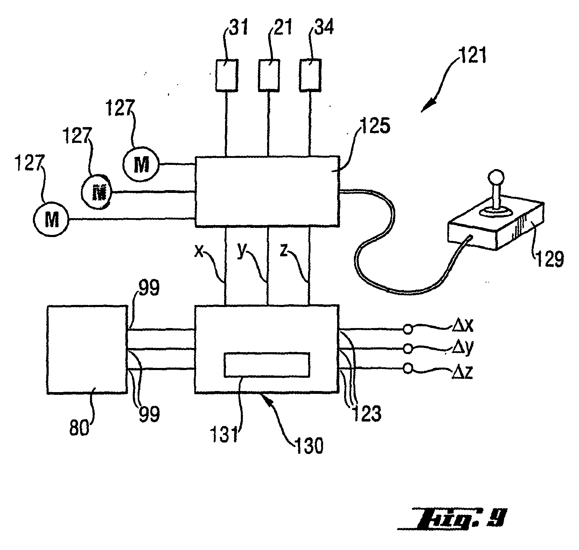

Figur 9 zeigt schematisch einen Teil einer Steuerung 121 des Koordinatenmeßgerätes 1, welche an den Ausgängen 123 Signale bereitstellt, welche die Auslenkung der Tastspitze 83 als Koordinaten Δx, Δy und Δz angeben. Der Steuerungsteil 121 umfaßt eine Positionierungskomponente 125, welche zum einen die Motoren 127 zum Verfahren des Meßkopfes in den drei Raumkoordinaten ansteuert, wobei das Verfahren des Meßkopfes 36 entweder durch Betätigung eines Bedienpults 129 durch einen Benutzer erfolgen oder auch durch ein in der Komponente 125 gespeichertes Programm vorgegeben sein kann. Andererseits liest die Komponente 125 auch die Sensoren 31, 21 und 34 ab, um die Position des Tastkopfes 36 bezüglich des Werkstückhalters 7 in den drei Raumkoordinaten x, y und z eines wählbaren Koordinatensystems zu bestimmen. Diese drei Koordinaten x, y und z werden von der Komponente 125 an eine Tastkopfkalibrierkomponente 130 übergeben, welche ebenfalls die von der Schaltung 78 an den Anschlüssen 99 (vgl. Figur 6) ausgegebenen Signale der Abstandssensoren des Auslenkungsmeßsystems 80 einliest. Die Kalibrierkomponente 130 umfaßt auch einen Speicher 131 zum Speichern von Signalmustern der Abstandssensoren in Abhängigkeit von Verfahrwegen.

Zur Kalibrierung des Auslenkungsmeßsystems 80 geht die Steuerung 121 wie folgt vor: Zunächst ist die Tastspitze 83 in ihrer Ruhelage, das heißt in keinem Kontakt mit einem Werkstück. Das dann an den Anschlüssen 99 ausgegebene Signalmuster wird in dem Speicher 131 gespeichert. Sodann bringt der Benutzer durch Betätigen des Schaltpults 129 die Tastspitze in den im Zusammenhang mit den Figuren 7 und 8 beschriebenen Kontakt mit dem Kalibrierkörper 9 und betätigt auch die Stromzuführung 104 an den Elektromagneten 111, um die Tastspitze 83 in Kontakt mit dem Kalibrierkörper 9 zu halten. Sodann läuft in der Steuerung 121 ein vorbestimmtes Kalibrierprogramm ab. Da das Ineingriffbringen von Tastspitze 83 und Kalibrierkörper bereits zu einer Auslenkung der Tastspitze 83 aus der Ruhelage geführt haben kann, betätigt die Steuerung 125 die Motoren 127 iterativ so lange, bis an den Ausgängen 99 wieder das in dem Speicher 131 gespeicherte Signalmuster ausgegeben wird, welches der Ruhelage der Tastspitze 83 entspricht. Die in diesem Zustand von der Komponente 125 ausgegebenen Werte x, y, z werden als Werte x₀, y₀, z₀ ebenfalls in dem Speicher 131 gespeichert. Sodann werden die Motoren 127 betätigt, um den Meßkopf um eine kleine Strecke in eine neue Position x, y, z zu verfahren. Dies führt zu einer Auslenkung Δx = x-x₀, Δy = y - y₀, Δz = z - z₀ der Tastspitze 83 aus ihrer Ruhelage. In dem Speicher 131 wird dann das an den Anschlüssen 99 ausgegebene Signalmuster zusammen mit Δx, Δy und Δz gespeichert. Dieser Vorgang wird für eine Vielzahl von Verfahrstrecken bzw. Auslenkungen Δx, Δy, Δz wiederholt und daraufhin das Kalibrierverfahren beendet.

Treten im Meßbetrieb Auslenkungen der Tastspitze 83 aus ihrer Ruhelage auf, so wird von der Komponente 130 das an den Anschlüssen 99 ausgegebene Signalmuster des Auslenkungsmeßsystems 80 untersucht. Entspricht das Signalmuster einem in dem Speicher 131 vorhandenen Signalmuster, so werden die zusammen mit diesem Muster gespeicherten Auslenkungen Δx, Δy, Δz als Auslenkungen der Tastspitze 83 aus der Ruhelage an den Anschlüssen 123 ausgegeben. Entspricht das im Betrieb auftretende Signalmuster an den Anschlüssen 99 nicht exakt einem bereits in dem Speicher 131 gespeicherten Muster, so werden zwei oder mehrere Muster aus dem Speicher ausgewählt, die dem gerade auftretenden Muster am nächsten kommen, und es wird eine Interpolation zwischen diesen nahekommenden Mustern und den zusammen mit ihnen gespeicherten Auslenkungen Δx, Δy, Δz durchgeführt, um dann die aktuelle interpolierte Auslenkung als Auslenkungen der Tastspitze 83 aus der Ruhelage an den Anschlüssen 123 auszugeben.

Nachfolgend werden Varianten der in den Figuren 1 bis 9 erläuterten Ausführungsformen dargestellt. Hinsichtlich ihres Aufbaues und ihrer Funktion einander entsprechende Komponenten sind mit den Bezugszahlen aus den Figuren 1 bis 9 bezeichnet, zur Unterscheidung jedoch mit einem zusätzlichen Buchstaben versehen. Zur Erläuterung wird auf die gesamte vorangehende Beschreibung jeweils Bezug genommen.

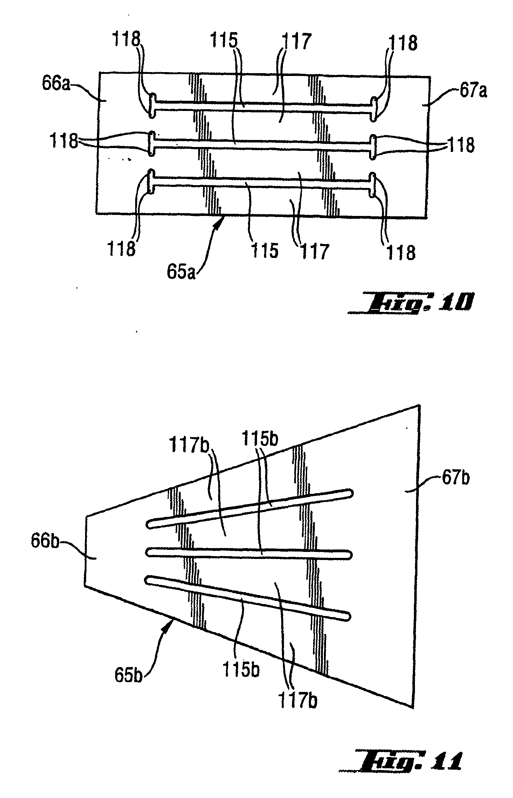

Figur 10 zeigt eine Variante einer Blattfeder 65a, wie sie zur Bereitstellung der Führung zwischen dem oberen Ende der Taststifthalterung und dem Gehäuse des Tastkopfes eingesetzt werden kann. Die Blattfeder 65a ist nicht wie die in den Figuren 2, 3 und 4 dargestellte Blattfeder aus einem kontinuierlichen Membranmaterial gebildet, sondern weist in Längsrichtung sich erstreckende Schlitze 115 auf, die einzelne Streifen 117 von Membranfedermaterial voneinander trennen. Die Schlitze 115 erstrecken sich in Längsrichtung der Feder 65a nicht bis zu deren Enden 66a und 67a, so daß an den Enden 66a, 67a ein quer zur Erstreckungsrichtung der Streifen 117 verlaufender kontinuierlicher Materialsteg verbleibt, an dem die Feder 65a in ihre Halterungen auf Seiten des Gehäuses und auf Seiten der Taststifthalterung eingespannt werden kann. Die Schlitze 115 sind an ihren Enden T-förmig verbreitert und weisen somit an den Enden quer zur Schlitzrichtung sich erstreckende Zweigschlitze 118 auf. Die Schlitze 117 können allerdings auch ohne die Zweigschlitze 118 ausgeführt sein. Die durch die Membranstreifen 117 erzeugte Führungswirkung der Blattfeder begünstigt eine präzise und reproduzierbare Verschwenkung des Taststifthalters um eine Schwenkachse die sich in den Figuren 2 bis 4 in etwa in x-Richtung erstreckt.

Figur 11 zeigt, ähnlich wie Figur 10, eine weitere Variante einer Blattfeder 65b. Bei der Blattfeder 65b ist ein Ende 67b, welches zur Einspannung auf Seiten des Gehäuses vorgesehen ist, breiter ausgeführt als ein Ende 66b, welches zur Einspannung an dem Taststifthalter vorgesehen ist. Auch die Blattfeder 65b weist Schlitze 115b auf, die entsprechende Materialstreifen 117b voneinander trennen. Im Unterschied zur Figur 11 verlaufen die Schlitze 115b bzw. Streifen 117b nicht parallel zueinander sondern mit zu dem Ende 67b hin kontinuierlich zunehmendem Abstand voneinander.

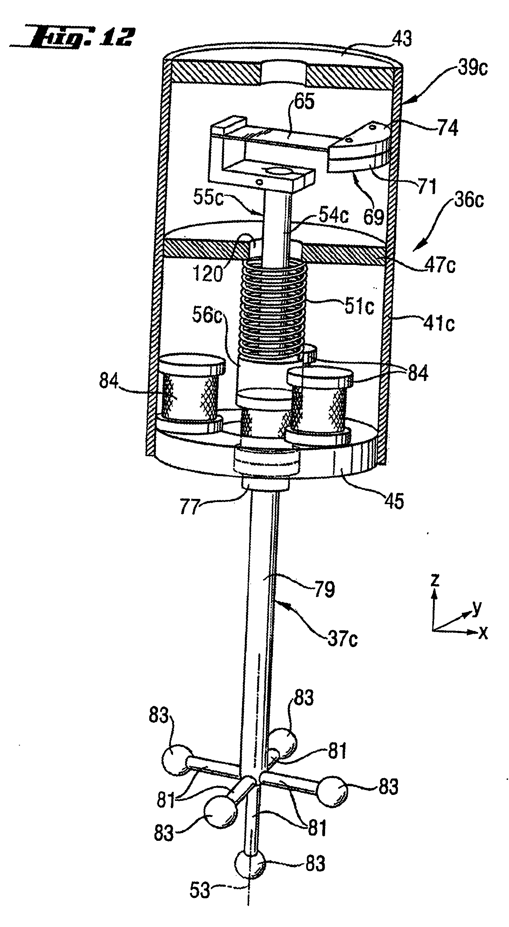

Figur 12 zeigt eine weitere Ausführungsform eines Tastkopfes 36c, der dem in den Figuren 2 bis 4 dargestellten Tastkopf weitgehend ähnlich ist. Allerdings unterschieden sich diese Tastköpfe in der Ausbildung der Federanordnung zur Rückstellung eines Taststiftes 37c. Während in den Figuren 2 bis 4 die Rückstellung in die Ruhelage durch eine Spiralfeder erfolgt, erfolgt dies bei dem Tastkopf 36c durch eine mit mehreren Windungen um die Längsachse verlaufende Schraubenfeder 51c, die einerseits an einem zentralen Bereich 56c einer Taststifthalterung 55c befestigt ist und andererseits, mit ihrem in z-Richtung oberen Ende an einer Scheibe 47c, die durch einen Gehäusemantel 41c horizontal im Inneren des Gehäuses 39c gehalten ist und die eine zentrale Ausnehmung 120 aufweist, und den Durchtritt eines Schaftes 54c der Taststifthalterung 55c ermöglicht. Auch die Schraubenfeder 51c erfüllt die Funktion, den Taststift 37c sowohl in z-Richtung als auch in Horizontalrichtung in seiner Ruhelage zu halten und gegenüber Auslenkungen aus der Ruhelage eine entsprechende Rückstellkraft bereitzustellen.

Es ist ebenfalls möglich, die Federeinrichtung zur Rückstellung in die Ruhelage durch eine Schraubenfeder, wie sie in Figur 11 dargestellt ist, kombiniert mit einer Spiralfeder, wie sie in den Figuren 2 bis 4 dargestellt ist, bereitzustellen. Es ist durch die Kombination von Schrauben- und Spiralfeder noch besser möglich, Kennlinien der Rückstellkraft in Abhängigkeit von der Auslenkungsrichtung auf eine gewünschte Federwirkung einzustellen. Es ist auch möglich, den Taststifthalter durch jegliche andere denkbare Art von Federanordnung in seiner Ruhelage bezüglich des Gehäuses zu halten. Beispielsweise kann dies durch eine Vielzahl über den Umfang um die Längsachse verteilt angeordneter Radialfedern oder ähnliches erfolgen.

Ferner ist es möglich, anstatt des Auslenkungsmeßsystemes, welches vorangehend durch drei Abstandssensoren beschrieben wurden, durch jegliches anderes Auslenkungsmeßsystem zu ersetzen. Ebenso ist es möglich, das vorangehende Auslenkungsmeßsystem mit mehreren Abstandssensoren auch an Tastköpfen einzusetzen, bei denen die Taststifthalterung nicht über eine Führung und eine mit Abstand zu der Führung angeordnete Feder an den Tastkopfchassis gehaltert ist. Ferner ist es auch möglich, das beschriebene Verfahren zum Kalibrieren eines Tastkopfes sowie den Kalibrierkörper für jegliche andere Art von Tastkopf einzusetzen.

Ebenso ist vorgesehen, anstatt des Elektromagneten in dem Kalibrierkörper einen Permanentmagneten vorzusehen, um die Haltekraft für die Tastspitze bereitzustellen. Ebenso ist es möglich, die Tastspitze oder einen Schaft des Taststiftes durch einen Greifer in der Ruhelage zu halten, während die Kalibrierung durchgeführt wird.

## Patentansprüche

1. Tastkopf für ein Koordinatenmeßgerät (1), umfassend:
ein an dem Koordinatenmeßgerät (1) anbringbares Tastkopfchassis (39),
eine an dem Tastkopfchassis (39) aus einer Ruhelage auslenkbar gehalterte starre Taststifthalterung (55) mit einer Längsachse (53),
eine Federanordnung (51) zur Bereitstellung einer Federkraft zur Rückführung der Taststifthalterung (55) in die Ruhelage, und
eine an dem Tastkopfchassis (39) vorgesehene Führung (65), welche an die Taststifthalterung (55) an einem ersten Ort (58) der Längsachse (53) angreift und den ersten Ort (58) der Taststifthalterung (55) bezüglich dem Tastkopfchassis (39) in einer Richtung (75) verlagerbar führt, die im wesentlichen mit der Längsrichtung (53) zusammenfällt,
wobei die Federanordnung (51) einerseits an dem Tastkopfchassis (39) und andererseits an der Taststifthalterung (55) an einem zweiten Ort (56) der Längsachse (53) festgelegt ist, der mit Abstand von dem ersten Ort (58) angeordnet ist,
wobei die Taststifthalterung (55) relativ zu dem Tastkopfchassis (39) ferner in eine der Richtung (75) entgegengesetzte Richtung aus der Ruhelage auslenkbar ist;
wobei die Führung (65) eine einerseits an dem Tastkopfchassis (39) und andererseits an dem ersten Ort (58) der Taststifthalterung festgelegte Membrananordnung (65) aufweist;
wobei die Membrananordnung (65) lediglich über einen Teilumfang (α) um die Längsachse (53) an dem Tastkopfchassis (39) festgelegt ist; und
wobei ein Abstand (R) des an dem Tastkopfchassis (39) festgelegten ersten Endes (67) der Membrananordnung (65) von der Längsachse (53) kleiner ist, als ein Abstand (L) zwischen dem ersten Ende (67) und dem an der Taststifthalterung (55) festgelegten zweiten Ende (66) der Membrananordnung (65).

2. Tastkopf nach Anspruch 1, wobei die Membrananordnung (65a, 65b) eine Mehrzahl parallel zueinander oder im wesentlichen radial bezüglich der Längsachse (53) sich erstreckende Membranstreifen (117; 117b) aufweist.

3. Tastkopf nach Anspruch 1 oder 2, wobei die Membrananordnung (65) durch eine Blattfeder (65) gebildet ist.

4. Tastkopf für ein Koordinatenmeßgerät (1), umfassend:
ein an dem Koordinatenmeßgerät (1) anbringbares Tastkopfchassis (39),
eine an dem Tastkopfchassis (39) aus einer Ruhelage auslenkbar gehalterte starre Taststifthalterung (55) mit einer Längsachse (53),
eine Federanordnung (51) zur Bereitstellung einer Federkraft zur Rückführung der Taststifthalterung (55) in die Ruhelage, und
eine an dem Tastkopfchassis (39) vorgesehene Führung (65), welche an die Taststifthalterung (55) an einem ersten Ort (58) der Längsachse (53) angreift und den ersten Ort (58) der Taststifthalterung (55) bezüglich dem Tastkopfchassis (39) in einer Richtung (75) verlagerbar führt, die im wesentlichen mit der Längsrichtung (53) zusammenfällt,
wobei die Federanordnung (51) einerseits an dem Tastkopfchassis (39) und andererseits an der Taststifthalterung (55) an einem zweiten Ort (56) der Längsachse (53) festgelegt ist, der mit Abstand von dem ersten Ort (58) angeordnet ist,
wobei die Taststifthalterung (55) relativ zu dem Tastkopfchassis (39) ferner in eine der Richtung (75) entgegengesetzte Richtung aus der Ruhelage auslenkbar ist
wobei die Führung (65) eine einerseits an dem Tastkopfchassis (39) und andererseits an dem ersten Ort (58) der Taststifthalterung festgelegte Membrananordnung (65) aufweist, die durch eine Blattfeder (65a) gebildet ist;
wobei die Membrananordnung (65) lediglich über einen Teilumfang (α) um die Längsachse (53) an dem Tastkopfchassis (39) festgelegt ist;
wobei die Blattfeder (65a) Schlitze (115) aufweist, die eine Mehrzahl parallel zueinander sich erstreckende Membranstreifen (117) der Blattfeder (65a) voneinander trennen;
wobei die Schlitze (115) sich in einer Längsrichtung der Blattfeder (65a) erstrecken; wobei die Längsrichtung sich von einem ersten Ende (66a) der Blattfeder zu einem zweiten Ende (67a) der Blattfeder (65a) erstreckt, wobei das erste Ende (66a) an dem Tastkopfchassis (39) festgelegt ist und das zweite Ende (67a) an der Taststifthalterung (55) festgelegt ist.

5. Tastkopf für ein Koordinatenmeßgerät (1), umfassend:
ein an dem Koordinatenmeßgerät (1) anbringbares Tastkopfchassis (39),
eine an dem Tastkopfchassis (39) aus einer Ruhelage auslenkbar gehalterte starre Taststifthalterung (55) mit einer Längsachse (53),
eine Federanordnung (51) zur Bereitstellung einer Federkraft zur Rückführung der Taststifthalterung (55) in die Ruhelage, und
eine an dem Tastkopfchassis (39) vorgesehene Führung (65), welche an die Taststifthalterung (55) an einem ersten Ort (58) der Längsachse (53) angreift und den ersten Ort (58) der Taststifthalterung (55) bezüglich dem Tastkopfchassis (39) in einer Richtung (75) verlagerbar führt, die im wesentlichen mit der Längsrichtung (53) zusammenfällt,
wobei die Federanordnung (51) einerseits an dem Tastkopfchassis (39) und andererseits an der Taststifthalterung (55) an einem zweiten Ort (56) der Längsachse (53) festgelegt ist, der mit Abstand von dem ersten Ort (58) angeordnet ist,
wobei die Taststifthalterung (55) relativ zu dem Tastkopfchassis (39) ferner in eine der Richtung (75) entgegengesetzte Richtung aus der Ruhelage auslenkbar ist
wobei die Führung eine einerseits an dem Tastkopfchassis (39) und andererseits an dem ersten Ort (58) der Taststifthalterung festgelegte Membrananordnung (65) aufweist, die durch eine Blattfeder (65b) gebildet ist;
wobei die Membrananordnung (65) lediglich über einen Teilumfang (α) um die Längsachse (53) an dem Tastkopfchassis (39) festgelegt ist;
wobei die Blattfeder (65b) Schlitze (115b) aufweist, die einzelne Materialstreifen (117b) der Blattfeder (65b) voneinander trennen, und wobei die Materialstreifen (117b) sich im wesentlichen radial bezüglich der Längsachse (53) erstrecken.

6. Tastkopf nach einem der Ansprüche 1 bis 5, wobei der Teilumfang (α) einen Winkelbereich von weniger als 40° umfaßt.

7. Tastkopf nach einem der Ansprüche 1 bis 6, wobei die Federanordnung (51) eine in Längsrichtung (Z) orientierte Komponente der Rückstellkraft zu mehr als 70% bereitstellt.

8. Tastkopf nach einem der Ansprüche 1 bis 6, wobei die Federanordnung (51) eine in Längsrichtung (Z) orientierte Komponente der Rückstellkraft zu mehr als 85%, bereitstellt.

9. Tastkopf nach einem der Ansprüche 4 bis 9, wobei ein Abstand (R) des an dem Tastkopfchassis (39) festgelegten ersten Endes (67) der Membrananordnung (65) von der Längsachse (53) kleiner ist, als ein Abstand (L) zwischen dem ersten Ende (67) und dem an der Taststifthalterung (55) festgelegten zweiten Ende (66) der Membrananordnung (65).

10. Tastkopf nach einem der Ansprüche 1 bis 3 oder 10, wobei der Abstand (L) zwischen dem ersten (67) und dem zweiten Ende (66) der Membrananordnung (65) wenigstens das 1,2-fache des Abstands (R) des ersten Endes (67) von der Längsachse (53) aufweist.

11. Tastkopf nach einem der Ansprüche 1 bis 3 oder 10, wobei der Abstand (L) zwischen dem ersten (67) und dem zweiten Ende (66) der Membrananordnung (65) wenigstens das 1,5-fache, des Abstands (R) des ersten Endes (67) von der Längsachse (53) aufweist.

12. Tastkopf nach einem der Ansprüche 1 bis 11, wobei der Teilumfang (α) einen Winkelbereich von weniger als 20° umfasst.

13. Tastkopf nach einem der Ansprüche 1 bis 12, wobei die Federanordnung eine die Längsachse (53) mehrmals umschließende Spiralfeder (51) oder/und Schraubenfeder (51c) umfaßt.

14. Tastkopf nach einem der Ansprüche 1 bis 13, wobei der zweite Ort (56) in einer Ebene zwischen dem ersten Ort (58) und einem für eine Taststiftspitze (83) vorgesehenen Ort angeordnet ist.

15. Tastkopf nach einem der Ansprüche 1 bis 14, wobei die Taststifthalterung (55) durch die Führung (65) schwenkbar an dem Tastkopfchassis (39) angelenkt ist.

16. Koordinatenmeßgerät mit einer Werkstückhalterung (7), einem bezüglich der Werkstückhalterung (7) räumlich verfahrbaren Tastkopf (36) nach einem der Ansprüche 1 bis 15 zum Antasten eines an der Werkstückhalterung (7) anbringbaren Werkstücks.

## Claims

1. A scanning head for a coordinate measuring device (1), comprising
a scanning head chassis (39) mountable to the coordinate measuring device (1),
a rigid scanning stylus support (55) supported on the scanning head chassis (39) to be displaceable out of a rest position, said scanning stylus support having a longitudinal axis (53);
a spring array (51) for providing a spring force for returning the scanning stylus support (55) into the rest position, and
a guide (65) provided on the scanning head chassis (39) to act on the scanning stylus support (55) at a first location (58) of the longitudinal axis (53) and to movably guide the first location (58) of the scanning stylus support (55) relative to the scanning head chassis (39) in a direction (75) which substantially coincides with said longitudinal direction (53),
wherein the spring array (51) is fixed in position on the scanning head chassis (39), on the one hand, and on the scanning stylus support (55), on the other hand, at a second location (56) of said longitudinal axis (53) spaced apart from said first location (58), wherein the scanning stylus support (55) is provided to be displaceable out of the rest position relative to the scanning head chassis (39) also in a direction opposite to said direction (75);
wherein the guide comprises a diaphragm array (65) which is fixed in position on the scanning head chassis (39), on the one hand, and on the first location (58) of the scanning stylus support, on the other hand;
wherein the diaphragm array (65) is fixed in position at the scanning head chassis (39) merely over a partial circumference (α) about the longitudinal axis (53);
wherein a distance (R) of the first end (67) of the diaphragm array (65) fixed in position at the scanning head chassis (39) from the longitudinal axis (53) is smaller than a distance (L) between the first end (67) and the second end (66) of the diaphragm array fixed in position at the scanning stylus support (55).

2. The scanning head according to claim 1, wherein the diaphragm array (65a, 65b) comprises a plurality of diaphragm strips (117; 117b) extending in parallel to each other or substantially radially relative to the longitudinal axis (53).

3. The scanning head according to claim 1 or 2, wherein the diaphragm array is formed by a leaf spring (65).

4. A scanning head for a coordinate measuring device (1), comprising
a scanning head chassis (39) mountable to the coordinate measuring device (1),
a rigid scanning stylus support (55) supported on the scanning head chassis (39) to be displaceable out of a rest position, said scanning stylus support having a longitudinal axis (53);
a spring array (51) for providing a spring force for returning the scanning stylus support (55) into the rest position, and
a guide (65) provided on the scanning head chassis (39) to act on the scanning stylus support (55) at a first location (58) of the longitudinal axis (53) and to movably guide the first location (58) of the scanning stylus support (55) relative to the scanning head chassis (39) in a direction (75) which substantially coincides with said longitudinal direction (53),
wherein the spring array (51) is fixed in position at the scanning head chassis (39), on the one hand, and at the scanning stylus support (55) on the other hand, at a second location (56) of said longitudinal axis (53) spaced apart from said first location (58),
wherein the scanning stylus support (55) is provided to be displaceable out of the rest position relative to the scanning head chassis (39) also in a direction opposite to said direction (75);
wherein the guide comprises a diaphragm array (65) which is fixed in position on the scanning head chassis (39), on the one hand, and on the first location (58) of the scanning stylus support, on the other hand and which is formed by a flat spring (65a);
wherein the diaphragm array (65) is fixed in position at the scanning head chassis (39) merely over a partial circumference (α) about the longitudinal axis (53);
wherein the flat spring (65a) comprises slits (115), which separate a plurality of diaphragm strips (117; 117b) extending in parallel to each other;
wherein the slits (115) extend in a longitudinal direction of the flat spring (65a); wherein the longitudinal direction extends from a first end (66a) of the flat spring (65a) to a second end (67a) of the flat spring (65a); wherein the first end (66a) is fixed at the scanning head chassis (39) and the second end (67a) is fixed at the scanning stylus support (55).

5. A scanning head for a coordinate measuring device (1), comprising
a scanning head chassis (39) mountable to the coordinate measuring device (1),
a rigid scanning stylus support (55) supported on the scanning head chassis (39) to be displaceable out of a rest position, said scanning stylus support having a longitudinal axis (53);
a spring array (51) for providing a spring force for returning the scanning stylus support (55) into the rest position, and
a guide (65) provided on the scanning head chassis (39) to act on the scanning stylus support (55) at a first location (58) of the longitudinal axis (53) and to movably guide the first location (58) of the scanning stylus support (55) relative to the scanning head chassis (39) in a direction (75) which substantially coincides with said longitudinal direction (53),
wherein the spring array (51) is fixed in position on the scanning head chassis (39), on the one hand, and on the scanning stylus support (55), on the other hand, at a second location (56) of said longitudinal axis (53) spaced apart from said first location (58),
wherein the scanning stylus support (55) is provided to be displaceable out of the rest position relative to the scanning head chassis (39) also in a direction opposite to said direction (75);
wherein the guide comprises a diaphragm array (65) which is fixed in position at the scanning head chassis (39), on the one hand, and on the first location (58) of the scanning stylus support, on the other hand and which is formed by a flat spring (65a);
wherein the diaphragm array (65) is fixed in position at the scanning head chassis (39) merely over a partial circumference (α) about the longitudinal axis (53);
wherein the flat spring (65a) comprises slits (115), which separate a plurality of diaphragm strips (117b); and wherein the diaphragm strips (117b) substantially extend in a radial direction with respect to the longitudinal axis (53).

6. The scanning head according to claims 1 to 5, wherein the partial circumference (α) comprises an angle range of less than 40°.

7. The scanning head according to one of claims 1 to 6, wherein the spring array (51) provides a component of the reset force, oriented in longitudinal direction (Z), to more than 70 %.

8. The scanning head according to one of claims 1 to 6, wherein the spring array (51) provides a component of the reset force, oriented in longitudinal direction (Z), to more than 85 %.

9. The scanning head according to one of claims 4 to 9, wherein a distance (R) of the first end (67) of the diaphragm array (65) fixed in position on the scanning head chassis (39) from the longitudinal axis (53) is smaller than a distance (L) between the first end (67) and the second end (66) of the diaphragm array fixed in position on the scanning stylus support (55).

10. The scanning head according to one of claims 1 to 3 or 10, wherein the distance (L) between the first end (67) and the second end (66) of the diaphragm array (65) is at least 1.2 times the distance (R) of the first end (67) from the longitudinal axis (53).

11. The scanning head according to one of claims 1 to 3 or 10, wherein the distance (L) between the first end (67) and the second end (66) of the diaphragm array (65) is at least 1.5 times, the distance (R) of the first end (67) from the longitudinal axis (53).

12. The scanning head according to one of claims 1 to 11, wherein the partial circumference (α) comprises an angle range of less than 20°.

13. The scanning head according to one of claims 1 to 12, wherein the spring array comprises a helical spring (51) or/and coil spring (51c) which encircle said longitudinal axis (53) several times.

14. The scanning head according to one of claims 1 to 13, wherein the second location (56) is located in a plane between the first location (58) and a location provided for the scanning stylus tip (83).

15. The scanning head according to one of claims 1 to 14, wherein the scanning stylus support (55) is pivotally hinged to the scanning head chassis (39) by means of the guide (65).

16. A coordinate measuring device comprising a workpiece holder (7) and a scanning head (36) according to one of claims 1 to 15 which is spatially displaceable relative to the workpiece holder (7) for scanning a workpiece mountable on the workpiece holder (7).

## Revendications

1. Sonde pour appareil de mesure de coordonnées (1), comportant :
un châssis de sonde (39) pouvant être placé sur l'appareil de mesure de coordonnées (1),
une monture de palpeur (55) rigide montée sur le châssis de sonde (39) avec possibilité de dévier d'une position de repos, comportant un axe longitudinal (53) ;
un dispositif à ressort (51) pour mettre à disposition une force élastique pour ramener la monture de palpeur (55) dans la position de repos, et
un guide (65) prévu sur le châssis de sonde (39), qui est appliqué à la monture de palpeur (55) en un premier emplacement (58) de l'axe longitudinal (53) et guide avec possibilité de déplacer le premier emplacement (58) de la monture de palpeur (55) par rapport au châssis de sonde (39) dans une direction (75) qui coïncide essentiellement avec la direction longitudinale (53),
où le dispositif à ressort (51) est fixé d'une part au châssis de sonde (39) et d'autre part à la monture de palpeur (55) en un second emplacement (56) de l'axe longitudinal (53) qui est disposé à distance du premier emplacement (58),
où la monture de palpeur (55) peut être déviée de la position de repos par rapport au châssis de sonde (39) en outre dans une direction opposée à la direction (75),
où le guide (65) présente un dispositif à membrane (65) fixé d'une part au châssis de sonde (39) et d'autre part au premier emplacement (58) de la monture de palpeur ;
où le dispositif à membrane (65) est fixé au châssis de sonde (39) simplement sur une étendue partielle (α) autour de l'axe longitudinal (53) ; et
où une distance (R) de la première extrémité (67) du dispositif à membrane (65) fixé au châssis de sonde (39) à l'axe longitudinal (53) est plus petite qu'une distance (L) entre la première extrémité (67) et la seconde extrémité (66) du dispositif à membrane (65) fixé à la monture de palpeur (55).

2. Sonde selon la revendication 1, dans laquelle le dispositif à membrane (65a, 65b) présente plusieurs bandes de membrane (117 ; 117b) qui s'étendent parallèlement les unes aux autres ou essentiellement radialement par rapport à l'axe longitudinal (53).

3. Sonde selon la revendication 1 ou 2, dans laquelle le dispositif à membrane (65) est formé par un ressort à lames (65).

4. Sonde pour appareil de mesure de coordonnées (1), comportant :
un châssis de sonde (39) pouvant être placé sur l'appareil de mesure de coordonnées (1),
une monture de palpeur (55) rigide montée sur le châssis de sonde (39) avec possibilité de dévier d'une position de repos, comportant un axe longitudinal (53) ;
un dispositif à ressort (51) pour mettre à disposition une force élastique pour ramener la monture de palpeur (55) dans la position de repos, et
un guide (65) prévu sur le châssis de sonde (39), qui est appliqué à la monture de palpeur (55) en un premier emplacement (58) de l'axe longitudinal (53) et guide avec possibilité de déplacement le premier emplacement (58) de la monture de palpeur (55) par rapport au châssis de sonde (39) dans une direction (75) qui coïncide essentiellement avec la direction longitudinale (53),
où le dispositif à ressort (51) est fixé d'une part au châssis de sonde (39) et d'autre part à la monture de palpeur (55) en un second emplacement (56) de l'axe longitudinal (53) qui est disposé à distance du premier emplacement (58),
où la monture de palpeur (55) peut être déviée de la position de repos par rapport au châssis de sonde (39) en outre dans une direction opposée à la direction (75),
où le guide (65) présente un dispositif à membrane (65) fixé d'une part au châssis de sonde (39) et d'autre part au premier emplacement (58) de la monture de palpeur, ledit dispositif à membrane (65) étant formé par un ressort à lames (65a) ;
où le dispositif à membrane (65) est fixé au châssis de sonde (39) simplement sur une étendue partielle (α) autour de l'axe longitudinal (53) ;
où le ressort à lame (65a) comprend des fentes (115) séparant les unes des autres une pluralité de bandes de membrane (117) du ressort à lame (65a) s'étendant parallèlement les unes aux autres,
où les fentes (115) s'étendent dans une direction longitudinale du ressort à lame (65a) ; où la direction longitudinale s'étend d'une première extrémité (66a) du ressort à lame à une seconde extrémité (67a) du ressort à lame (65a), où la première extrémité (66a) est fixée au châssis de sonde (39) et la seconde extrémité (67a) est fixée à la monture de palpeur (55).

5. Sonde pour appareil de mesure de coordonnées (1), comportant :
un châssis de sonde (39) pouvant être placé sur l'appareil de mesure de coordonnées (1),
une monture de palpeur (55) rigide montée sur le châssis de sonde (39) avec possibilité de dévier d'une position de repos, comportant un axe longitudinal (53) ;
un dispositif à ressort (51) pour mettre à disposition une force élastique pour ramener la monture de palpeur (55) dans la position de repos, et
un guide (65) prévu sur le châssis de sonde (39), qui est appliqué à la monture de palpeur (55) en un premier emplacement (58) de l'axe longitudinal (53) et guide avec possibilité de déplacer le premier emplacement (58) de la monture de palpeur (55) par rapport au châssis de sonde (39) dans une direction (75) qui coïncide essentiellement avec la direction longitudinale (53),
où le dispositif à ressort (51) est fixé d'une part au châssis de sonde (39) et d'autre part à la monture de palpeur (55) en un second emplacement (56) de l'axe longitudinal (53) qui est disposé à distance du premier emplacement (58),
où la monture de palpeur (55) peut être déviée de la position de repos par rapport au châssis de sonde (39) plus loin dans une direction opposée à la direction (75),
où le guide présente un dispositif à membrane (65) fixé d'une part au châssis de sonde (39) et d'autre part au premier emplacement (58) de la monture de palpeur, ledit dispositif à membrane étant formé par un ressort à lames (65) ;
où le dispositif à membrane (65) est fixé au châssis de sonde (39) simplement sur une étendue partielle (α) autour de l'axe longitudinal (53) ; et
où le ressort à lame (65a) comprend des fentes (115b) séparant les unes des autres les bandes de matériau (117b) individuelles du ressort à lames (65b), et où les bandes de matériau (117b) s'étendent sensiblement radialement par rapport à l'axe longitudinal (53).

6. Sonde selon l'une des revendications 1 à 5, dans laquelle l'étendue partielle (α) occupe une plage angulaire de moins de 40°.

7. Sonde selon l'une des revendications 1 à 6, dans laquelle le dispositif à ressort (51) met à disposition une composante de la force de rappel orientée dans la direction longitudinale (Z) de plus de 70 %.

8. Sonde selon l'une des revendications 1 à 6, dans laquelle le dispositif à ressort (51) met à disposition une composante de la force de rappel orientée dans la direction longitudinale (Z) de plus de 85 %.

9. Sonde selon l'une des revendications 4 à 9, dans laquelle une distance (R) de la première extrémité (67) du dispositif à membrane (65) fixé au châssis de sonde (39) à l'axe longitudinal (53) est plus petit qu'une distance (L) entre la première extrémité (67) et la seconde extrémité (66) du dispositif à membrane (65) fixé à la monture de palpeur (55).

10. Sonde selon l'une des revendications 1 à 3 ou 10, dans laquelle la distance (L) entre la première (67) et la seconde (66) extrémité du dispositif à membrane (65) présente au moins 1,2 fois la distance (R) de la première extrémité (67) à l'axe longitudinal (53).

11. Sonde selon l'une des revendications 1 à 3 ou 10, dans laquelle la distance (L) entre la première (67) et la seconde (66) extrémité du dispositif à membrane (65) présente au moins 1,5 fois la distance (R) de la première extrémité (67) à l'axe longitudinal (53).

12. Sonde selon l'une des revendications 1 à 11, dans laquelle l'étendue partielle (α) occupe une plage angulaire de moins de 20°.

13. Sonde selon l'une des revendications 1 à 12, dans laquelle le dispositif à ressort comporte un ressort à spirale (51) et/ou un ressort à vis (51c) entourant plusieurs fois l'axe longitudinal (53).

14. Sonde selon l'une des revendications 1 à 13, dans laquelle le second emplacement (56) est disposé dans un plan entre le premier emplacement (58) et un emplacement prévu pour une pointe de palpeur (83).

15. Sonde selon l'une des revendications 1 à 14, dans laquelle la monture de palpeur (55) est articulée sur le châssis de sonde (39) avec possibilité de pivoter grâce au guide (65).

16. Appareil de mesure de coordonnées comportant une monture porte-pièce (7) et une sonde (36) selon l'une des revendications 1 à 15 mobile dans l'espace par rapport à la monture porte-pièce (7), pour palper une pièce pouvant être amenée à la monture porte-pièce (7).
